(19) **Europäisches Patentamt / European Patent Office / Office européen des brevets**

(11) **EP 1 403 626 B1**

(12) **EUROPEAN PATENT SPECIFICATION**

(45) Date of publication and mention
of the grant of the patent:
**07.12.2011 Bulletin 2011/49**

(21) Application number: **02771699.2**

(22) Date of filing: **09.05.2002**

(51) Int Cl.:
***G01F 3/10*** (2006.01)

(86) International application number:
**PCT/JP2002/004539**

(87) International publication number:
**WO 2002/095340 (28.11.2002 Gazette 2002/48)**

(54) **SERVO TYPE VOLUMETRIC FLOWMETER**

VOLUMETRISCHER STRÖMUNGSMESSER DES SERVOTYPS

DEBITMETRE VOLUMETRIQUE ASSERVI

(84) Designated Contracting States:
**DE FR NL**

(30) Priority: **21.05.2001 JP 2001150430**
**03.08.2001 JP 2001236785**

(43) Date of publication of application:
**31.03.2004 Bulletin 2004/14**

(73) Proprietor: **OVAL CORPORATION**
**Tokyo 161-8508 (JP)**

(72) Inventors:
• **MISUMI, Masao,**
**c/o OVAL Corporation**
**Tokyo 161-8508 (JP)**
• **OGAWA, Yutaka,**
**c/o OVAL Corporation**
**Tokyo 161-8508 (JP)**

• **ONO, Seigo,**
**c/o OVAL Corporation**
**Tokyo 161-8508 (JP)**
• **HANDA, Ryuta,**
**c/o OVAL Corporation**
**Tokyo 161-8508 (JP)**

(74) Representative: **Grünecker, Kinkeldey,**
**Stockmair & Schwanhäusser**
**Leopoldstrasse 4**
**80802 München (DE)**

(56) References cited:
**JP-A- 4 294 211    JP-A- 5 340 781**
**JP-A- 6 288 807    US-A- 3 748 903**
**US-A- 4 305 302    US-A- 5 339 685**

**Description**

TECHNICAL FIELD

The present invention relates to a servo type volumetric flowmeter and, more specifically, to a servo type volumetric flowmeter having an excellent instrumental error characteristic attaining a near-to-zero instrumental error over a wide range from small fluid to large fluid.

BACKGROUND ART

A conventional volumetric flowmeter comprises a measuring chamber with a pair of rotors disposed therein to form a specified inner space defined as a reference volume to receive therein and deliver therefrom fluid to be measured by means of the rotors rotating by the differential pressure of the fluid and measures the fluid flow rate from the rotation count of the rotors.

In an ideal volumetric flowmeter, a specified volume of fluid, which corresponds to the reference volume, is delivered in proportion to rotation of the rotors.

However, in an actual volumetric flowmeter, there is a small gap between the rotors and the inner wall of the measuring chamber to allow the rotors to freely rotate and prevent the rotors from contacting the inner wall of the measuring chamber. A rotating torque which overcomes mechanical loads such as, for example, a friction load of a bearing and a load of a rotation counting portion is necessary to rotate the rotors, and the rotating torque is obtained from a rotary moment produced by a differential pressure of fluid, which effects to the rotors, between upstream side and downstream side of the measuring chamber.

Therefore, when rotating the rotors by the energy of the fluid to be measured (by a self-running type volumetric flowmeter), there may arise a very small amount of leakage of fluid from an inlet side into an outlet side through the gap between the inner wall of the measuring chamber and the rotors.

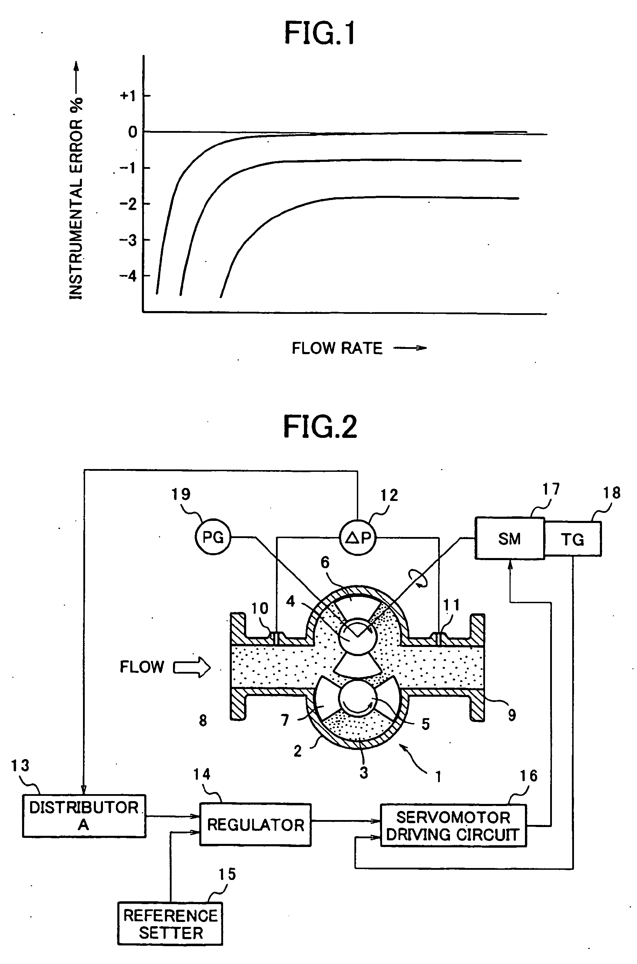

Fig. 1 shows an example of instrumental error characteristics of a self-running type volumetric flowmeter. As shown in Fig. 1, the leakage may be larger in a small flow rate zone with a large ratio of the friction torque to the moment produced by a differential pressure of the fluid, which produces negative instrumental errors. The instrumental error characteristics of the flowmeter may vary depending upon a magnitude of differential pressure in other flow rate zones. Furthermore, the flowmeter may have different instrumental error characteristics depending upon the viscosity of fluid to be measured as shown by three characteristic curves with different viscosity in Fig. 1.

In contrast, volumetric flowmeters are capable of directly measuring a volumetric flow rate with a high accuracy and used widely for industrial and commercial applications.

However, as described above, the volumetric flowmeters can not be free from leakage of fluid through a small gap necessary for rotating the rotors in the measuring chamber, which leakage is very small but cannot be ignored when measuring a very small flow rate and/or a flow rate of fluid with an increased accuracy.

A leakage value is proportional to a pressure drop of fluid in a passage between the inlet and outlet of the volumetric flowmeter.

To achieve reliable and accurate measurement of flow rates of fluid without being affected by the physical property (e.g., viscosity and density) of the fluid, it is necessary to accurately measure a pressure drop of fluid between the inlet and outlet of the flowmeter, compensate the pressure drop always to be zero by giving rotors a driving power by a servomotor and then measure a flow rate of the fluid from the rotation count of the rotors. This is realized by a servo type volumetric flowmeter.

US 5,339,685 discloses a positive-displacement fluid flow meter comprising a correction system to correct for loss of head in the meter with an external motor and a differential pressure detector coupling the motor to the shaft of the meter when differential pressure is between inlet and outlet of the meter is detected.

US 3,748,903 discloses a flow meter having vertical rotor shafts, the load of which is reduced by an upwardly acting force due to the differential pressure between inlet and outlet passages, and which makes use of a restricting medium in the inlet passage to enhance said differential pressure.

Fig. 2 shows an exemplary construction of a conventional servo type volumetric flowmeter 1 which comprise a casing 2, a measuring chamber 3, a first rotor shaft 4, a second rotor shaft 5, a first rotor 6, a second rotor 7, an inlet 8, an outlet 9, an inlet pressure detection port 10, an outlet pressure detection port 11, a differential pressure gauge 12, a distributor A 13, a regulator 14, a reference setter 15, a servomotor driving circuit 16, a servomotor (SM) 17, a tachometer generator (TG) 18 and a flow rate transmitter (PG) 19.

The volumetric flowmeter 1 has an inlet 8 and an outlet 9 communicating with each other and comprises the measuring chamber 3 formed in a passage (casing 2) and the first and second rotors 6, 7 supported by the first and second rotor shafts 4, 5 respectively secured to the inside wall of the measuring chamber 3. The first rotor 6 and the second rotor 7 are provided with pilot gears (not shown) which are disposed outside the measuring chamber 3 and engage with each other for synchronously rotating the rotors in the directions reverse to each other. In the shown instance, a driving shaft of the servomotor (SM) 17 is fitted with the pilot gear of the first rotor 6 (it is also possible to be alternatively fitted with the pilot gear of the second rotor 7).

Pressures at the inlet pressure detection port 10 and the outlet pressure detection port 11 provided respectively at the inlet 8 and the outlet 9 of the volumetric flowmeter 1 are introduced through piping to the differential pressure gauge 12 where a pressure drop between the inlet and the outlet of the volumetric flowmeter 1 is measured.

The servomotor (SM) 17, the tachometer generator (TG) 18 and the pilot gear of the first rotor 6 are coupled in series with each other by the servomotor's driving shaft.

The tachometer generator (TG) 18 generates a voltage signal proportional to the rotation of the servomotor (SM) 17 and its output is fed back to the servomotor (SM) 17 through the servomotor driving circuit 16.

The flow rate transmitter (PG) 19 has a mechanism for measuring the number of rotations of the first rotor 6 in the shown example (or of the second rotor 7 in alternative arrangement) and generates a pulse signal proportional to a flow rate.

A differential pressure signal from the differential pressure gauge 12 is converted through the distributor A 13 to a voltage value $V_p$ proportional to the differential pressure and then input to the regulator 14 where it is compared with a reference value given by the reference setter 15 to produce an output $V_1$ to be transmitted to one of input terminals of the servomotor driving circuit 16.

An output $V_2$ of the tachometer generator (TG) 18 is also fed back to the other input terminal of the servomotor driving circuit 16. A servomechanism which controls the rotation of the servomotor (SM) 17 so that the output $V_1$, from the regulator 14, obtained by comparison of a differential pressure signal $V_p$ from the differential pressure gauge 12 (i.e., a pressure drop $\Delta P$ between the inlet and the outlet of the volumetric flowmeter 1) with a preset reference value may be equal to the output $V_2$ of the tachometer generator (TG) 18, which output corresponds to the number of rotations of the servomotor (SM) 17, is formed.

A flow of fluid to be measured in the direction shown by an arrow increases a differential pressure signal of the differential pressure gauge 12. In this instance, the servo control system composed of the servomotor driving circuit 16 and the servomotor (SM) 17 operates and reduces to zero the differential pressure $\Delta P$ between the inlet and the outlet of the volumetric flowmeter. In other words, a reference value of the regulator 14 is preset to zero and the servomotor 17 is driven to forcibly rotate the rotors to reduce the differential pressure $\Delta P$ to the reference "zero" value.

As described above, the conventional servo type volumetric flowmeter controls the rotation of the rotors by forcibly rotating the rotors by using the servomotor irrespective of a large or small flow rate of fluid so that the differential pressure $\Delta P$ between the inlet and the outlet of the flowmeter becomes zero. This is based on such a theory that no leakage is measured if a flow rate of fluid can be measured with no pressure drop between the inlet and the outlet of the volumetric flowmeter.

However, the result of actual measurements of flow rates of fluid by the conventional servo type volumetric flowmeter indicates that its instrumental error characteristics can be improved in the low flow rate zone in comparison with the conventional self-running type volumetric flowmeter having a large negative instrumental error in the same zone, but its instrumental errors are generally positive and increases as the flow rate and/or the density of the fluid increases.

The reason why the conventional volumetric flowmeter has positive instrumental errors can be explained as follows:

The forced rotation of the rotors by using the servomotor to control to zero the pressure drop between the inlet and the outlet of the volumetric flowmeter, causes the pressure of fluid flowing in the measuring chamber to increase after the paired rotors (on the outlet side) and decrease before the paired rotors (on the inlet side) in the measuring chamber, producing a differential pressure $\Delta Pi$ across the rotor in the measuring chamber even if the pressure drop $\Delta P$ between the inlet and the outlet of the volumetric flowmeter is reduced to zero. Namely, the differential pressure $\Delta Pi$ causes a small part of the fluid to leak from the outlet side into the inlet side of the measuring chamber through a gap between the inner wall of the casing and the rotors.

DISCLOSURE OF INVENTION

In view of the foregoing, it is the main object of the present invention to provide a servo type volumetric flowmeter which is capable of measuring a flow rate of fluid at an improved accuracy in such a manner that it does not regulate a differential pressure $\Delta P$ between an inlet and outlet of the flowmeter to zero as performed in the conventional servo type volumetric flowmeter and, instead of the above, controls an external pressure drop $\Delta Pe$ (to be described later) so as to attain $\Delta Pi=0$ at which the leakage of fluid from the outlet side into the inlet side is reduced and, therefore, the instrumental error characteristic of the flowmeter is improved.

The servo type volumetric flowmeter according to the present invention comprises a pair of first and second rotors rotating by the differential pressure of fluid in a measuring chamber disposed in a passage to deliver a specified volume of fluid per rotation and measure the flow rate of fluid from the rotation of the rotors, which is further provided with a servomotor coupled with either the first rotor or the second rotor, a differential pressure gauge for detecting a differential pressure between upstream side pressure and downstream side pressure of fluid in the measuring chamber and a servomechanism for driving the servomotor so as to make a differential pressure signal from the differential pressure gauge be equal to $k(\gamma/2g)V^2$ (where, $\gamma$ is the density of fluid being measured, V is the flow speed of the fluid, g is the gravitational acceleration, and k is a constant dependent on the structural dimensions of the flowmeter and the frictional coefficient of the pipe).

The constant k is determined depending on the shapes and size of the inlet and the outlet, inside shapes and dimensions of the flowmeter and the frictional coefficient of the pipe and can be expressed as for example $k=\lambda(L/D)$ (where, $\lambda$ is the frictional coefficient of piping, L is the axial length of piping of each portion and D is the inside diameter of each portion of the flowmeter), which is determined as a total of values determined for respective portions. V may be a velocity or a flow rate of the fluid in piping or a rotational speed of the rotor.

Further, in the servo type volumetric flowmeter according to the present invention, which is used for measuring a flow rate of gas, $\gamma$ is obtained from a pressure sensor disposed either at the upstream side or downstream side pressure detection port of the differential pressure gauge and V is obtained from a flow rate transmitter connected to either the first or the second rotor and the both values are multiplied by each other to determine a value of $k(\gamma/2g)V^2$.

Further, in the servo type volumetric flowmeter according to the present invention, which is used for measuring a flow rate of liquid, $\gamma$ is externally input and V is obtained from a flow rate transmitter connected to either the first or the second rotor and both values are multiplied by each other to determine a value of $k(\gamma/2g)V^2$.

The servo type volumetric flowmeter according to the present invention is further featured by that the servomechanism for driving the servomotor to make the differential pressure signal be equal to $k(\gamma/2g)V^2$ is realized by a program incorporated in a microcomputer.

Another object of the present invention is to provide a servo type volumetric flowmeter which is capable of obtaining a reference control signal of an external pressure drop from a restricting mechanism such as for example a Venturi tube, orifice plate and nozzle (i.e., a differential pressure generating mechanism) disposed separate from the flowmeter, controlling the differential pressure $\Delta P$ to follow up the reference control signal to compensate merely an internal pressure drop and thereby preventing the instrumental error from increasing due to a possible leakage of the fluid from the outlet side into the inlet side of the flowmeter.

The servo type volumetric flowmeter according to the present invention comprises a measuring chamber disposed in the passage, a pair of first and second rotors rotating in the measuring chamber to deliver a specified volume of fluid per rotation, a first differential pressure gauge for detecting a difference between the upstream and downstream pressures of the measuring chamber, a restricting mechanism disposed in series with the passage for restricting a flow of fluid, a second differential pressure gauge for detecting a difference between the upstream and downstream pressures of the restricting mechanism and a servomechanism for driving either the first or the second rotor to follow up a reference value decided by adjusting the differential pressure signal from the first differential pressure gauge by the differential pressure signal from the second differential pressure gauge.

BRIEF DESCRIPTION OF DRAWINGS

Fig. 1 shows an example of instrumental error characteristics of a self-running type volumetric flowmeter.
Fig. 2 shows an exemplary construction of a conventional servo type volumetric flowmeter.
Fig. 3 is a mimic illustration of distribution of pressures of fluid in a conventional servo type volumetric flowmeter, which is used for explaining the principle of a servo type volumetric flowmeter according to the present invention.
Fig. 4 is a construction view of a servo type volumetric flowmeter according to an embodiment of the present invention.
Fig. 5 shows an example of instrumental error characteristics of the servo type volumetric flowmeter shown in Fig. 4.
Fig. 6 is a construction view of a servo type volumetric flowmeter according to another embodiment of the present invention.
Fig. 7 shows an example of instrumental error characteristics of the servo type volumetric flowmeter shown in Fig. 6.

BEST MODE FOR CARRYING OUT THE INVENTION

Generally, if a pressure drop $\Delta P$ of fluid flowing in a volumetric flowmeter is detected at a differential pressure detecting positions at a sufficient distance from a pair of rotors, it can be defined as $\Delta P=\Delta Pi+\Delta Pe$, where $\Delta Pi$ is a pressure drop caused by rotating the rotor, which is called "internal pressure drop" directly relating to the internal leakage of the volumetric flowmeter, and APe is a pressure drop caused by flowing the fluid in the volumetric flowmeter, which is called "external pressure drop" not directly relating to the leakage.

In the volumetric flowmeter incorporating a pair of rotors, a leakage $\Delta q$ caused for a unit time inside the volumetric flowmeter by the effect of a differential pressure $\Delta Pi$ of fluid before and after the rotors, which directly relates to the internal leakage of the volumetric flowmeter, may have the following expression:

$$\Delta q = Ka \cdot (\Delta Pi/\mu) + Kb \cdot Q \qquad \qquad \cdots\cdots \quad (1)$$

where, $\mu$ is the viscosity of fluid, Q is a flow rate of fluid, ka and kb are constants dependent on shapes of rotors and casing respectively. Therefore, a leakage caused for a unit time inside the volumetric flowmeter is proportional to a difference between pressures of fluid before and after rotors but includes terms reverse proportional to viscosity of fluid and terms proportional to a flow rate of fluid.

Representing an indication of an apparatus to be proved in terms of I and a true value of a reference apparatus in terms of Q, an instrumental error E is expressed as:

$$E = ((I-Q)/Q) \times 100 \; (\%) \qquad \qquad \cdots\cdots \quad (2)$$

From the relation to the leakage $\Delta q$ in the flowmeter,

$$I-Q = -\Delta q \qquad \qquad \cdots\cdots \quad (3)$$

Therefore, from Equations (1), (2) and (3), the instrumental error E has the following expression:

$$E = -(\Delta q/Q) = -(ka \cdot (\Delta Pi/(\mu \cdot Q)) + kb) \qquad \cdots\cdots \quad (4)$$

When the differential pressure $\Delta Pi$ across the rotors (the first term in Equation (4)) is reduced to zero, the internal leakage of the flowmeter is reduced to zero at which the flow rate of the fluid becomes correctly proportional to the rotation of the rotor. Thus, the instrumental error in this state may be near to zero. The second term in Equation (4) can be neglected by changing the meter factor.

Therefore, the instrumental error of the servo type volumetric flowmeter can be reduced to zero by controlling the differential pressure measured at the positions for detecting the pressure drop $\Delta P$ so as to attain $\Delta Pi=0$ (no internal pressure drop). In other words, the external driving force is applied just to make the external pressure drop $\Delta Pe$ be equal to the reference control value of the differential pressure. By doing so, the internal pressure drop $\Delta Pi$ can be reduced to zero, thereby the internal leakage of the flowmeter is eliminated. Consequently, the flowmeter having no internal leakage, i.e., no instrumental error is realized.

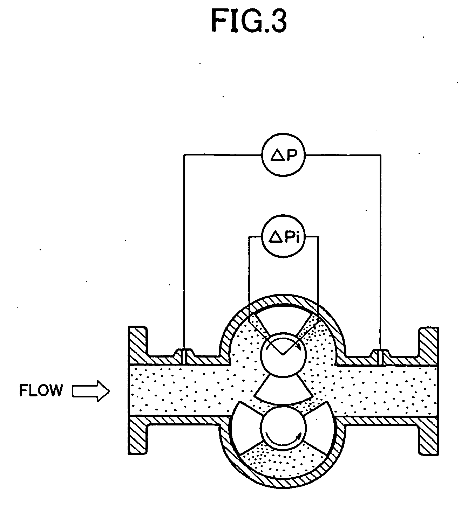

Referring to Fig. 3 schematically illustrating the distribution of pressures of fluid in a conventional servo type volumetric flowmeter, the operating principle of the servo type volumetric flowmeter according to the present invention will be described below.

When a differential pressure $\Delta P$ between the inlet side and the outlet side of the servo type volumetric flowmeter is controlled to zero as described above, a differential pressure $\Delta Pi$ is produced across the paired rotors in the passage, causing a leakage of fluid from the outlet side into the inlet side through a gap between the casing and the rotors. The leakage may increase as the pressure and/or flow rate of fluid increases correlatively with density $\gamma$ of fluid being measured and a rotational speed V of the rotors. In this instance, the instrumental error of the flowmeter becomes positive.

Accordingly, the servo type volumetric flowmeter according to an embodiment of the present invention does not regulate, in view of an external pressure drop $\Delta Pe$, the differential pressure $\Delta P$ between the inlet and the outlet of the flowmeter to zero and, instead of the above, controls the pressure drop $\Delta Pi$ across the rotor (i.e., the internal pressure drop $\Delta Pi$) in the equation $\Delta P=Pi+\Delta Pe$ to zero by increasing the pressure of fluid on the inlet side by a value $\Delta P=\Delta Pe=k(\gamma/2g)V^2$. This can control the internal pressure drop $\Delta Pi$ of fluid across the rotors in the volumetric flowmeter to zero, thereby achieving no leakage of fluid from the outlet side into the inlet side of the volumetric flowmeter through the gap between the casing and rotors.

In the control value $k(\gamma/2g)V^2$, k is a constant dependent on the inside shape and dimensions of the flowmeter and the frictional coefficient of the pipe and can be expressed for example as $k=\lambda(L/D)$, where $\lambda$ is the frictional coefficient of the pipe, L is the axial length of the inside pipe of the flowmeter and D is the inside diameter of the flowmeter). V is a rotational speed of the rotor in the shown case but it may be a velocity of flow or a flow rate of fluid.

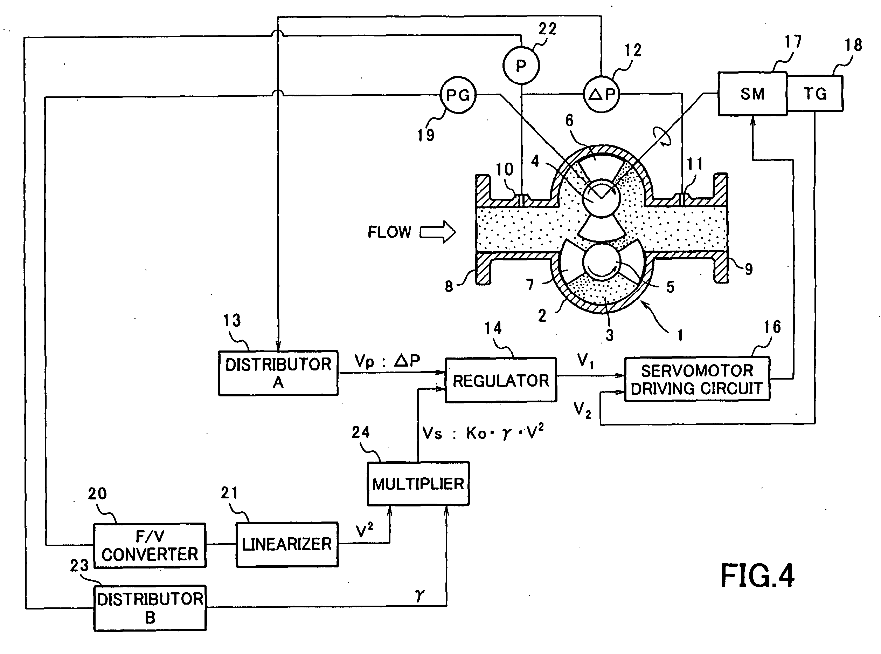

Fig. 4 is a conceptual construction view of a servo type volumetric flowmeter according to an embodiment of the present invention. In Fig. 4, there is shown a volumetric flowmeter 1, a casing 2, a measuring chamber 3, a first rotor shaft 4, a second rotor shaft 5, a first rotor 6, a second rotor 7, an inlet 8, an outlet 9, an inlet pressure detection port 10, an outlet pressure detection port 11, a differential pressure gauge 12, a distributor A 13, a regulator 14, a servomotor driving circuit 16, a servomotor (SM) 17 and a tachometer generator (TG) 18 and a flow rate transmitter (PG) 19. The above-mentioned components of the volumetric flowmeter are substantially common and similar in function to those of the conventional servo type volumetric flowmeter shown in Fig. 2. Like components are given the same numbers and will not be further described. The first and second rotors 6 and 7 can be rotated in the measuring chamber 3 by the servomotor 17.

The servo type volumetric flowmeter of the present invention differs from the conventional flowmeter of Fig. 2 by the provision of an F/V converter 20, a linearizer 21, a pressure gauge 22, a distributor B 23 and a multiplier 24 instead of a reference setter 15 of the conventional volumetric flowmeter.

The F/V converter 20 receives from the flow rate transmitter (PG) 19 a pulse signal representing a flow rate and converts it into an analog voltage proportional to the frequency of the pulse signal, which voltage signal corresponds to the rotational speed V of the rotor.

The linearizer 21 squares an output of the F/V converter 20 and outputs a signal $V^2$ corresponding to a square of the rotational speed V of the rotor.

The pressure gauge 22 converts a pressure signal at the inlet pressure detection port 10 (or the outlet pressure detection port 11) into an electric voltage signal corresponding to a fluid pressure P.

The distributor B 23 receives the voltage signal corresponding to the detected pressure P of fluid from the pressure gauge 22 and, in case of measuring a flow rate of gas, converts the same signal into a voltage signal corresponding to the fluid density $\gamma$ proportional to the pressure P of fluid.

In case of measuring a flow rate of liquid, the fluid density $\gamma$ is determined by the kind of liquid with no dependence on the pressure P of fluid and does not require the use of this pressure gauge 22. Namely, a value pre-settable corresponding to the liquid to be measured is input directly and externally to the multiplier 24.

Having received the signal $V^2$ corresponding to a square of the rotor rotational speed V from the linearizer 21 and the signal corresponding to the density $\gamma$ from the distributor B 23, the multiplier 24 multiplies the signals by each other and produces an output signal Vs corresponding to a resultant value $k_0 \cdot \gamma \cdot V^2$. This signal is used by the regulator 14 as a reference value. $K_0$ is a constant which is equal to $k(1/2g) = \lambda(L/D) \cdot (1/2g)$.

As described before for the conventional volumetric flowmeter, a signal Vp corresponding to a differential pressure $\Delta P$ between the inlet and the outlet is input to the other terminal of the regulator 14 whereby it is compared with the signal Vs from the multiplier 24 and a signal $V_1$ corresponding to a value of $Vp-Vs=(\Delta P - k_0 \cdot \gamma \cdot V^2)$ is output to one of two input terminals of the servomotor driving circuit 16. The servomotor driving circuit 16 receives a voltage $V_2$ proportional to the number of rotations of the servomotor (SM) 17 through the other input terminal connected to a feed back circuit from the tachometer generator 18 and drives the servomechanism to control the rotation of the servomotor (SM) 17 in such a way that $V_2$ may become equal to $V_1$ from the regulator 14.

When measuring fluid flowing in the direction shown by an arrow in Fig. 4, the servo type volumetric flowmeter according to the present invention, instead of regulating an inlet-outlet differential pressure $\Delta P$ to zero in such way as conducted by the conventional servo type volumetric flowmeter, controls a differential pressure $\Delta Pi$ across the rotors to zero by increasing the pressure of the fluid on the inlet side of the volumetric flowmeter by a value corresponding to an external pressure drop $\Delta Pe = k(\gamma/2g)V^2$ occurred in the flowmeter corresponding to the rotation speed V of the rotors.

This can eliminates a differential pressure directed reverse to a differential pressure $\Delta Pi$ caused across a pair of rotors when an inlet-outlet differential pressure $\Delta P$ is controlled to zero as performed by the conventional servo type volumetric flowmeter. As the result of this, the leakage of fluid by a reverse flow through a gap between the casing and the rotors can be further reduced.

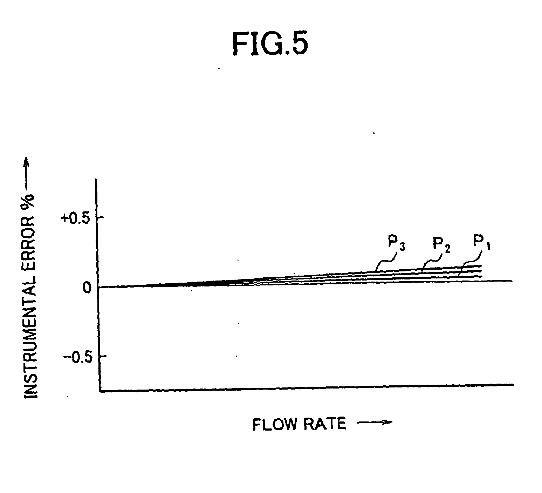

Fig. 5 shows an example of instrumental error characteristics of the servo type volumetric flowmeter according to the above-described embodiment, where $P_1$, $P_2$ and $P_3$ represent pressures of fluid being measured.

As shown in Fig. 5, the servo type volumetric flowmeter according to the present embodiment has excellent linear (near-to-zero error) instrumental error characteristics from low flow rate zone to high flow rate zone irrespective of pressures of fluid being measured.

As the rotational speed V of the rotors is different at its tip and root, it is desirable to control the differential pressure based on a pressure difference value determined by using a mean speed or by using a speed determined at the tip of the rotors in view of a gap between the casing and the tip of the rotors. By doing this, the accuracy of the control can be increased.

The control system constructed by hardware has been described above. The control system can also be constructed by using a microcomputer which executes a program of above-described control procedure and sets the density corresponding to the fluid to be measured by referring the table which consists of densities and names of different kinds of fluids.

Since fluid varies its density due to thermal expansion, it is desirable to measure the temperature of the fluid being measured and compensate for a change in density of the fluid to attain higher accuracy of measurement of the flow rate of the fluid.

As described above, the servo type volumetric flowmeter according to this embodiment can measure flow rates of fluid at an increased accuracy since the inlet side pressure of fluid is increased by a value of differential pressure produced in accordance with a rotational speed of the rotors to realize the differential pressure $\Delta Pi=0$ at which no leakage of fluid through a gap between the rotors and the casing of the flowmeter. This flowmeter can be applied to both kinds of fluids: liquid and gas.

The servo type volumetric flowmeter according to the above described embodiment of the present invention does not control the differential pressure $\Delta P$ of fluid between the inlet and the outlet to zero in view of external pressure drop $\Delta Pe$ and, instead of the above, controls the internal pressure drop $\Delta Pi$ across the rotors (in the expression $\Delta P=Pi+\Delta Pe$) to zero by increasing the inlet side pressure by a value $\Delta P=\Delta Pe=k(\gamma/2g)V^2=C \cdot \gamma \cdot Q^2$. This can achieve that an internal pressure drop $\Delta Pi$ of fluid across the rotors is reduced to zero ($\Delta Pi=0$) at which no leakage of fluid through the gap between the rotors and the casing occurs. In the above equation, k and C are constants dependent on inside shapes and dimensions of the flowmeter and the frictional coefficient of the pipe and expressed for example as $\lambda(L/D)$, where $\lambda$ is the frictional coefficient of the pipe, L is the axial length of the pipe, and D is the inside diameter of the volumetric flowmeter. In this embodiment, V is defined as the rotational speed of the rotor, which factor may be replaced by the fluid velocity or flow rate Q.

The servo type volumetric flowmeter according to another embodiment of the present invention obtains an external pressure drop from a restricting mechanism (for example, Venturi tube, orifice plate, nozzle, etc. , i.e. a differential pressure generating mechanism) disposed separately from the flowmeter and, using it as a reference control value, controls the differential pressure $\Delta P$ to compensate the internal pressure drop only.

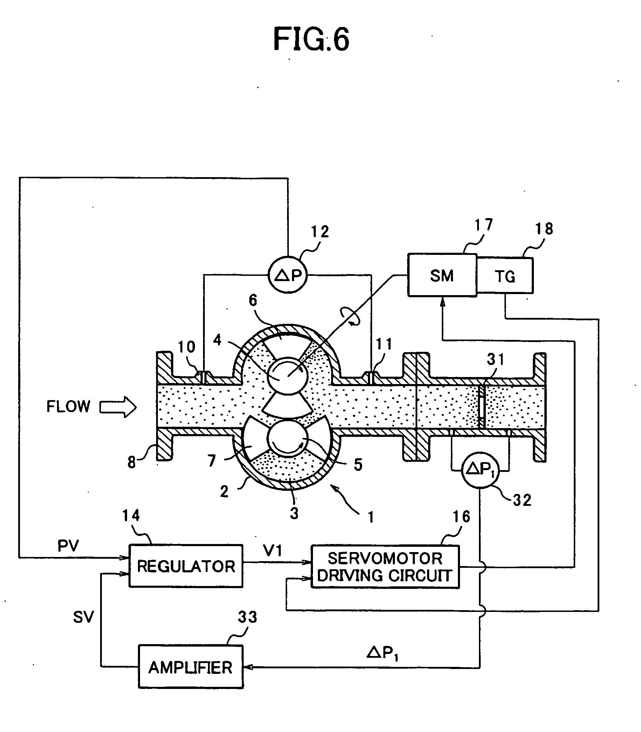

Fig. 6 is a construction view of a servo type volumetric flowmeter according to another embodiment of the present invention, and the volumetric flowmeter 1 comprises a casing 2, a measuring chamber 3, a first rotor shaft 4, a second rotor shaft 5, a first rotor 6, a second rotor 7, an inlet 8, an outlet 9, an inlet pressure detection port 10, an outlet pressure detection port 11 and a first differential pressure gauge 12. The above components are common and similar in function to those of the conventional servo type volumetric flowmeter shown in Fig. 2. Therefore, like components are given the same numbers and will not be further described. The first rotor 6 or the second rotor 7 in the measuring chamber 3 is driven into rotation by a servomotor 17.

The servo type volumetric flowmeter of the present invention differs from the conventional servo type volumetric flowmeter of Fig. 2 by the provision of a restricting mechanism 31 and a second differential pressure gauge 32 in replace of the reference setter 15 of the conventional flowmeter. In this embodiment, a differential pressure signal from the first differential pressure gauge 12 and a differential pressure signal from the second differential pressure gauge 32 are input to the regulator 14 by which the input signals are processed to produce a reference value according to which the first rotor 6 or the second rotor 7 is rotated by a servomechanism. The servomechanism comprises the servomotor driving circuit 16, servomotor (SM) 17 and tachometer generator (TG) 18. The reference value (for following-up reference value) is indicated to the servo driving circuit 16 which in turn drives the servomotor (SM) 17 to rotate the first rotor 6 or the second rotor 7. In the shown embodiment, the reference value is generated by using the differential pressure signal from the second differential pressure gauge 32, which was amplified by an amplifier 33.

The restricting mechanism (differential pressure generating mechanism) 31 is a restrictor for throttling the fluid passage by means of an orifice plate, nozzle or Venturi tube disposed in the midway of the passage to generate a differential pressure of the fluid. In the shown embodiment, the restricting mechanism 31 is arranged in series with the passage (pipe) at the position apart from the measuring chamber 3. The second differential pressure gauge 32 determines a differential pressure $\Delta Pe$ (corresponding to $Cp \cdot \gamma x \cdot Qx^2$) between pressures detected at pressure detecting ports provided on the upstream side and the downstream side of the restricting mechanism 31 in the passage and generates a differential pressure signal, where Cp is a constant dependent on the restriction ratio of the restricting mechanism (e.g., orifice), $\gamma x$ is the fluid density and Qx is the fluid flow rate.

The differential pressure signal from the differential pressure gauge 32 is input first to the amplifier 33 whereby its value corresponding to, e.g., $\Delta Pe= Cp \cdot \gamma x \cdot Qx^2$ is amplified by a factor of $k=C_0/Cp$ where $C_0$ is a constant dependent on the structure and dimensions of the restricting mechanism.

In the regulator 14, a signal Vp corresponding to an inlet-outlet differential pressure $\Delta P$ (corresponding to the process value PV), which is input through the other input terminal similar to the conventional flowmeter in Fig. 2, is compared with the signal Vs (corresponding to the reference value SV) from the amplifier 33 to produce a signal $V_1$ corresponding to (Vp-Vs) (corresponding to the reference value described before), which is then output to one of two input terminals of the servomotor driving circuit 16.

The servomotor driving circuit 16 receives a voltage $V_2$ proportional to the number of rotations of the servomotor (SM) 17 through the other input terminal connected to a feed back circuit from the tachometer generator (TG) 18 and drives a servomechanism to control the rotation of the servomotor (SM) 17 in such a way that $V_2$ will be equal to $V_1$ from the regulator 14. This reduces to zero the differential pressure ΔPi caused across the rotors in the direction of a flow of fluid.

Therefore, the provision of the restricting mechanism (e.g., an orifice plate) may increase a pressure drop in the fluid passage, but can eliminate the necessity of measuring the density of the fluid in advance and the necessity of compensating for temperature and pressure of fluid. This can realize a simple control system without using the linearizer, the multiplier and so on. The control system enables the flowmeter to eliminate a differential pressure reverse in direction to a differential pressure ΔPi which may be produced across the rotors in the conventional servo type volumetric flowmeter by controlling the inlet-outlet differential pressure ΔP to zero. As the result of this, the leakage of fluid by a reverse flow through the gap between the rotors and the casing can be further reduced. In particular, this control system is effective in case of measuring a flow rate of fluid being unstable in content and density and does not require consideration of the instrumental error shift due to the viscosity of fluid to be measured as shown in Fig. 1.

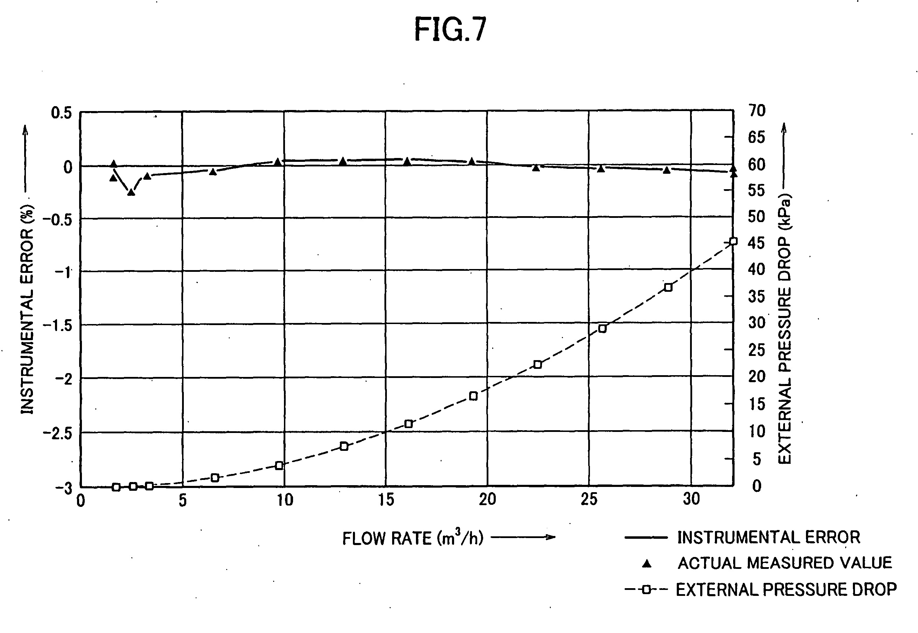

Fig. 7 shows an example of instrumental error characteristics of the servo type volumetric flowmeter according to the above-described embodiment. In Fig. 7, there is shown the results of experiments with the flowmeter for its instrumental error (at 30.9°C, 1.12 mPa·s) with an external pressure drop determined by calculation. The experimental result indicates that the flowmeter according to the present invention includes basic instrumental error of electric components and achieves an excellent instrumental characteristic with an accuracy ±0.1% or higher over a wide flow rate range being several times wider than the usual one.

As described above, the servo type volumetric flowmeter according to the shown embodiment of the present invention has a pair of the first and second rotors 6 and 7 for delivering a specified volume of fluid per rotation and measures a flow rate of fluid from the number of rotations of the servomotor for driving one of the paired rotors. A first differential pressure signal representing a difference between pressures detected at pressure detecting ports 10, 11 provided on the inlet 8 and the outlet 9 of the flowmeter is output from a differential pressure gauge 12. The restricting mechanism 31 is disposed in the midway of the passage of fluid and a differential pressure APe between pressures detected at pressure detecting ports provided on the upstream and downstream sides of the restricting mechanism is determined by the differential pressure gauge 32, from which a second differential pressure signal is output. The first differential pressure signal is adjusted by the second differential pressure signal to generate a reference value according to which the first rotor 6 or the second rotor 7 is rotated by the servomotor 17.

According to the present embodiment, a differential pressure measured across the restricting mechanism (differential pressure generating mechanism) is amplified by the amplifier to a desired value for generating a reference control value. The differential pressure between the inlet and outlet of the volumetric flowmeter is controlled to attain the reference control value. The differential pressure across the rotors in the measuring chamber is thus reduced to zero, thereby preventing the leakage of fluid through the gap between the casing and rotors. Owing to the above feature, this volumetric flowmeter having simplified construction can achieve a higher accuracy of measurement of flow rates of fluid over a wide range. This volumetric flowmeter can be effectively applied for measuring flow rates of fluid varying its content and density. The flowmeter can be used with no consideration for its instrumental error due to the viscosity of fluid to be measured.

INDUSTRIAL APPLICABILITY

The servo type volumetric flowmeter according to an aspect of the present invention can measure a flow rate of fluid at an increased accuracy since a differential pressure ΔPi across the rotors in the measuring chamber is decreased to zero by increasing the inlet side pressure of fluid by a value of the differential pressure caused in accordance with a rotational speed of the rotors and thereby the leakage of fluid through a gap between the casing and the rotors can be eliminated. This flowmeter can be applied to both gas and liquid.

The servo type volumetric flowmeter according to another aspect of the present invention has a simple construction and can measure a flow rate of fluid at an increased accuracy over a wide range since a differential pressure measured across the restricting mechanism (differential pressure generating mechanism) is amplified to a desired value to obtain a reference control value and the differential pressure between the inlet and the outlet of the flowmeter is controlled to follow up the reference control value at which the differential pressure across the rotors in the rotating direction is decreased to zero, thereby preventing the leakage of fluid through the gap between the casing and rotators. This flowmeter is effectively used for measuring flow rates of fluid which may vary its content and density with no consideration of instrumental error due to the viscosity of the fluid to be measured.

**Claims**

1. A servo type volumetric flowmeter having a measuring chamber (3) disposed in a passage of fluid and a pair of first and second rotors (6, 7) rotating by a differential pressure of fluid in the measuring chamber (3) to deliver a specified volume of fluid per rotation and being capable of measuring a flow rate of the fluid from rotation of the rotors (6, 7), which is further provided with:

a servomotor (17) coupled with one of the rotors (6, 7); and

differential pressure gauge (12) for detecting a difference between pressures on the upstream side and downstream side of the measuring chamber (3) and outputting a differential pressure signal;

**characterized by**

a servomechanism for driving the servomotor (17) in such a way that the differential pressure signal from the differential pressure gauge (12) will be equal to $k(\gamma/2g)V^2$ where $\gamma$ is density of fluid being measured, V is velocity of fluid, g is gravitational acceleration, k is a constant dependent on structural dimensions of the flowmeter, a frictional coefficient of a pipe, etc.

2. A servo type volumetric flowmeter as defined in claim 1, **characterized in that** $\gamma$ is obtained from a pressure sensor disposed at a pressure detecting port (10) on the upstream side or a pressure sensor disposed at a pressure detection port (11) on the downstream side of the differential pressure gauge (12), V is obtained from a flow rate transmitter (19) coupled with the first rotor (6) or the second rotor (7) and both the obtained values are multiplied by each other by a multiplier (24) to determine a value of $k(\gamma/2g)V^2$.

3. A servo type volumetric flowmeter as defined in claim 1, **characterized in that** $\gamma$ is externally input, V is obtained from a flow rate transmitter (19) coupled with the first rotor (6) or the second rotor (7) and both the obtained values are multiplied by each other by a multiplier (24) to determine a value of $k(\gamma/2g)V^2$.

4. A servo type volumetric flowmeter as defined in any one of claims 1 to 3, **characterized in that** the servomechanism for driving the servomotor (17) so as to control the differential pressure signal from the differential pressure gauge (12) to be equal to $k(\gamma/2g)V^2$ is realized by a program incorporated in a microcomputer.

5. A servo type volumetric flowmeter comprising
a measuring chamber (3) disposed in a passage of fluid;
a pair of first and second rotors (6, 7) rotating in the measuring chamber (3) to deliver a specified volume of fluid per rotation; and
a restricting mechanism (31) disposed in series with the passage to restrict the passage,
**characterized by**
a first differential pressure gauge (12) for detecting a differential pressure between an upstream side and a downstream side of the measuring chamber (3);
a second differential pressure gauge (32) for detecting a differential pressure between an upstream side and a downstream side of the fluid passage with the restricting mechanism (31) disposed therein; and
a servomechanism for obtaining a reference value by adjusting a differential pressure signal from the first differential pressure gauge (12) by a differential pressure signal from the second differential pressure gauge (32) and driving the first rotor (6) or the second rotor (7) to follow-up the reference value.

**Patentansprüche**

1. Servo-Durchflussmesser, der eine Messkammer (3), die in einem Fluiddurchlass angeordnet ist, sowie ein aus einem ersten und einem zweiten Rotor (6, 7) bestehendes Paar aufweist, das sich durch Fluiddruck-Differenz in der Messkammer (3) dreht, um ein vorgegebenes Fluidvolumen pro Umdrehung zuzuführen, und der in der Lage ist, einen Durchfluss des Fluids anhand der Drehung der Rotoren (6, 7) zu messen, wobei er des Weiteren versehen ist mit:

einem Servomotor (17), der mit einem der Rotoren (6, 7) gekoppelt ist; und
einem Differenzdruckmesser (12), mit dem eine Differenz zwischen Drücken an der stromauf liegenden Seite und der stromab liegenden Seite der Messkammer (3) erfasst wird und ein Differenzdruck-Signal ausgegeben wird;
**gekennzeichnet durch**
einen Servomechanismus, mit dem der Servomotor (17) so angetrieben wird, dass das Differenzdrucksignal von dem Differenzdruckmesser (12) $k(\gamma/2g)V^2$ entspricht, wobei $\gamma$ die Dichte des gemessenen Fluids ist, V die Geschwindigkeit des Fluids ist, g Gravitationsbeschleunigung ist, $k$ eine Konstante ist, die von strukturellen Abmessungen des Durchflussmessers, einem Reibungskoeffizienten eines Rohrs usw. abhängt.

**2.** Servo-Durchflussmesser nach Anspruch 1, **dadurch gekennzeichnet, dass** γ von einem Drucksensor, der an einem Druckerfassungsanschluss (10) an der stromauf liegenden Seite angeordnet ist, oder einem Drucksensor ermittelt wird, der an einem Druckerfassungsanschluss (11) an der stromab liegenden Seite des Differenzdruckmessers (12) angeordnet ist, V von einem Durchfluss-Sender (19) ermittelt wird, der mit dem ersten Rotor (6) oder dem zweiten Rotor (7) gekoppelt ist, und beide ermittelte Werte durch ein Multiplizierglied (24) miteinander multipliziert werden, um einen Wert von $k(\gamma/2g)V^2$ zu bestimmen.

**3.** Servo-Durchflussmesser nach Anspruch 1, **dadurch gekennzeichnet, dass** γ von außen eingegeben wird, V von einem Durchfluss-Sender (19) ermittelt wird, der mit dem ersten Rotor (6) oder dem zweiten Rotor (7) gekoppelt ist und beide ermittelte Werte durch ein Multiplizierglied (24) miteinander multipliziert werden, um einen Wert von $k(\gamma/2g)V^2$ zu bestimmen.

**4.** Servo-Durchflussmesser nach einem der Ansprüche 1 bis 3, **dadurch gekennzeichnet, dass** der Servomechanismus, mit dem der Servomotor (17) so angetrieben wird, dass das Differenzdruck-Signal von dem Differenzdruckmesser (12) so gesteuert wird, dass es $k(\gamma/2g)V^2$ entspricht, durch ein Programm realisiert wird, das in einen Mikrocomputer integriert ist.

**5.** Servo-Durchflussmesser, der umfasst:

eine Messkammer (3), die in einem Fluiddurchlass angeordnet ist;
ein aus einem ersten und einem ersten Rotor (6, 7) bestehendes Paar, das sich in der Messkammer (3) dreht, um ein vorgegebenes Volumen an Fluid pro Umdrehung zuzuführen; und
einen Drosselmechanismus (31), der in Reihe mit dem Durchlass angeordnet ist, um den Durchlass zu drosseln, **gekennzeichnet durch**
einen ersten Differenzdruck-Messer (12) zum Erfassen einer Druckdifferenz zwischen einer stromauf liegenden Seite und einer stromab liegenden Seite der Messkammer (3);
einen zweiten Differenzdruck-Messer (32) zum Erfassen einer Druckdifferenz zwischen einer stromauf liegenden Seite und einer stromab liegenden Seite des Fluiddurchlasses mit dem darin angeordneten Drosselmechanismus (31); und
einen Servomechanismus, mit dem ein Bezugswert ermittelt wird, indem ein Differenzdrucksignal von dem ersten Differenzdruckmesser (12) mittels eines Differenzdrucksignals von dem zweiten Differenzdruckmesser (32) reguliert wird und der erste Rotor (6) oder der zweite Rotor (7) so angetrieben werden, dass sie dem Bezugswert folgen.

**Revendications**

**1.** Débitmètre volumétrique du type asservi, comportant une chambre de mesure (3) disposée dans un passage de fluide, et des premier et second rotors (6, 7) qui tournent grâce à une pression différentielle de fluide dans la chambre de mesure (3) pour fournir un volume spécifié de fluide par rotation et qui sont aptes à mesurer un débit du fluide à partir de la rotation des rotors (6, 7), qui est également pourvu :

d'un servomoteur (17) accouplé à l'un des rotors (6, 7) ; et
d'un manomètre différentiel (12) pour détecter une différence entre les pressions côté amont et côté aval de la chambre de mesure (3) et pour émettre un signal de pression différentielle ;
**caractérisé par** un servomécanisme pour entraîner le servomoteur (17) de telle sorte que le signal de pression différentielle provenant du manomètre différentiel (12) soit égal à $k(\gamma/2g)V^2$, γ désignant la densité du fluide en cours de mesure, V la vitesse du fluide, g l'accélération gravitationnelle, k une constante qui est fonction de dimensions structurelles du débitmètre, d'un coefficient de friction d'un tuyau, etc.

**2.** Débitmètre volumétrique du type asservi tel que défini dans la revendication 1, **caractérisé en ce que** γ est obtenu à partir d'un capteur de pression disposé au niveau d'un orifice de détection de pression (10) côté amont, ou d'un capteur de pression disposé au niveau d'un orifice de détection de pression (11) côté aval du manomètre différentiel (12), V est obtenu à partir d'un transmetteur de débit (19) accouplé au premier rotor (6) ou au second rotor (7), et les deux valeurs obtenues sont multipliées l'une par l'autre grâce à un multiplicateur (24) pour déterminer une valeur de $k(\gamma/2g)V^2$.

**3.** Débitmètre volumétrique du type asservi tel que défini dans la revendication 1, **caractérisé en ce que** γ est entré de manière externe, V est obtenu à partir d'un transmetteur de débit (19) accouplé au premier rotor (6) ou au second rotor (7), et les deux valeurs obtenues sont multipliées l'une par l'autre grâce à un multiplicateur (24) pour déterminer une valeur de $k(\gamma/2g)V^2$.

4. Débitmètre volumétrique du type asservi tel que défini dans l'une quelconque des revendications 1 à 3, **caractérisé en ce que** le servomécanisme pour entraîner le servomoteur (17) de manière à commander le signal de pression différentielle provenant du manomètre différentiel (12) pour qu'il soit égal à $k(\gamma/2g)V^2$ est réalisé par un programme intégré dans un micro-ordinateur.

5. Débitmètre volumétrique du type asservi comprenant :

une chambre de mesure (3) disposée dans un passage de fluide ;
des premier et second rotors (6, 7) qui tournent dans la chambre de mesure (3) pour fournir un volume spécifié de fluide par rotation ; et
un mécanisme limiteur (31) disposé en série avec le passage pour limiter celui-ci,
**caractérisé par** un premier manomètre différentiel (12) pour détecter une pression différentielle entre un côté amont et un côté aval de la chambre de mesure (3) ;
un second manomètre différentiel (32) pour détecter une pression différentielle entre un côté amont et un côté aval du passage de fluide avec le mécanisme limiteur (31) disposé dans celui-ci ; et
un servomécanisme pour obtenir une valeur de référence en réglant un signal de pression différentiel provenant du premier manomètre différentiel (12) par un signal de pression différentiel provenant du second manomètre différentiel (32) et en entraînant le premier rotor (6) ou le second rotor (7) pour suivre la valeur de référence.

# FIG.1

# FIG.2

# FIG.3

FLOW ⟹

FIG.4

# FIG.5

# FIG.6

# FIG.7

FLOW RATE (m³/h) ⟶

—— INSTRUMENTAL ERROR
▲ ACTUAL MEASURED VALUE
--□-- EXTERNAL PRESSURE DROP

EP 1 403 626 B1

**EP 1 403 626 B1**

**REFERENCES CITED IN THE DESCRIPTION**

**Patent documents cited in the description**

- US 5339685 A
- US 3748903 A